# EUROPÄISCHE PATENTSCHRIFT

(11) **EP 0 833 734 B1**
(45) Veröffentlichungstag und Bekanntmachung des Hinweises auf die Patenterteilung: **22.12.1999**
(21) Anmeldenummer: 96919744.1
(22) Anmeldetag: 09.05.1996
(51) Int. Cl.: B29C 44/46, B29C 44/60, B29C 47/50

(54) **VERFAHREN UND VORRICHTUNG ZUR HERSTELLUNG EINES AUFGESCHÄUMTEN POLYMER**
PROCESS AND DEVICE FOR PRODUCING A FOAMED POLYMER
PROCEDE ET DISPOSITIF DESTINES A LA PRODUCTION D'UN POLYMERE EXPANSE

(30) Priorität: 13.06.1995 DE 19521520
(43) Veröffentlichungstag der Anmeldung: 08.04.1998
(73) Patentinhaber: Herrmann, Torsten, 82152 Planegg (DE)
(72) Erfinder: Herrmann, Torsten, 82152 Planegg (DE)
(74) Vertreter: Grünecker, Kinkeldey, Stockmair & Schwanhäusser Anwaltssozietät
(86) Internationale Anmeldenummer: EP9601971
(87) Internationale Veröffentlichungsnummer: WO9641709

(56) Entgegenhaltungen:
- CH-A- 671 186
- DE-A- 3 316 838
- DE-A- 3 600 041
- PATENT ABSTRACTS OF JAPAN vol. 009, no. 014 (M-352), 22.Januar 1985 & JP,A,59 164124 (KOBE SEIKOSHO KK), 17.September 1984,

## Beschreibung

Die Erfindung betrifft ein Verfahren und eine Extrusionsvorrichtung zur Herstellung eines aufgeschäumten Polymers.

Die DE 36 00 041 A1 offenbart eine Anlage für die Herstellung von Kunststoffhalbzeug aus geschäumten Kunststoff. Die Anlage weist eine einteilige oder mehrteilige Schneckenwelle auf, der eine Kunststoffeinspeisevorrichtung, eine Einspeisungszahnradpumpe für ein Treibmittel und eine Ausspeisungszahnradpumpe zugeordnet sind. Die Ausspeisungszahnradpumpe dient in üblicher Weise dazu, die Auswirkung eines hohen Drucks im anschießenden Ausformwerkzeug in Richtung der Extruderschnecken zu verhindern, wobei durch eine solche Zahnradpumpe eine Druckerhöhung im Vergleich zum Druck in den Schneckenwellen durchgeführt wird.

Aus der US-A-5158986 ist ein Verfahren und eine Extrusionsvorrichtung mit den Merkmalen der Oberbegriffe der Ansprüche 1 beziehungsweise 13 bekannt. Dadurch sollen aufgeschäumte Polymere hergestellt werden, die eine mikrozelluläre oder submikrozelluläre Struktur aufweisen. Diese ergibt sich dadurch, daß in dem Polymer durch Aufschäumen kleine Bläschen oder Zellen gebildet werden, die bei mikrozellulärer Struktur eine Zellgröße von weniger als 10 µm und eine Zelldichte von mehr als 10⁹ Zellen/cm³ und bei submikrozellulärer Struktur eine Zellgröße von kleiner 1 µm und eine Zelldichte von größer 10¹² Zellen/cm³ aufweisen.

Bei dem bekannten Verfahren zur Herstellung des aufgeschäumten Polymers mittels einer Extrusionsvorrichtung wird das Polymer der Extrusionsvorrichtung zugeführt und anschließend geschmolzen. Der Polymerschmelze wird ein unterer Druck stehendes Aufschäummittel wie Co₂, N₂ oder dergleichen zugeführt. Dabei soll möglichst soviel Aufschäummittel der Polymerschmelze zugeführt werden, wie in dieser bei dem vorgegebenen Druck und vorgegebener Temperatur lösbar ist. Anschließend werden Polymerschmelze und Aufschäummittel gemischt, um eine einphasige Mischung beziehungsweise Lösung herzustellen.

Um das Aufschäumen des Polymers zu erreichen, wird anschließend ein Druckabfall oder ein Temperaturanstieg erzeugt, wodurch eine Expansion des dem Polymer zugemischten Aufschäummittels eintritt und das Aufschäumen des Polymers stattfindet. Bei dem bekannten Verfahren und Vorrichtung wird ein Druckabfall durch eine Drossel erzeugt, wodurch sich eine thermodynamische Instabilität in dem Polymer/Aufschäummittel-Gemisch ergibt. Dadurch wird die Löslichkeit des Aufschäummittels im Polymer plötzlich geändert und eine Keimbildung für Gasbläschen oder Gaszellen setzt im Polymer ein. Diese Bläschen oder Zellen wachsen so lange an, bis der Druck auf Umgebungsdruck abgesenkt ist und die Temperatur unter eine sogenannte Glasübergangs- beziehungsweise Schmelztemperatur des Polymers sinkt. Vorher beziehungsweise gleichzeitig dazu wird das aufschäumende Polymer in einem Formwerkzeug in ein Endprodukt umgeformt.

Bei dem vorbekannten Verfahren und der Vorrichtung wird der Druckabfall in einer düsenförmigen Drossel erzeugt. Diese weist eine Eingangsöffnung mit im Vergleich zum Querschnitt ihrer Ausgangsöffnung größerem Querschnitt auf. Durch diese Querschnittsverminderung dient die Drossel zusätzlich zum Druckaufbau in der Extrusionsvorrichtung, wobei der zum Aufschäumen notwendige Druckabfall durch Reibung innerhalb der Drossel zwischen Eingangsöffnung und Ausgangsöffnung erzeugt wird. Weiterhin ist eine Durchflußrate für das Polymer/AufschäummittelGemisch durch die Drossel durch deren innere Struktur der Drossel und den erzeugten Druckabfall vorgegeben. Dabei hat es sich herausgestellt, daß bei Verwendung einer solchen düsenförmigen Drossel nur eine fadenförmige oder folienförmige Abgabe des aufgeschäumten Polymers erfolgen kann, wenn das Endprodukt eine ausreichend gute Qualität aufweisen soll. Eine gute Qualität des Endprodukts ergibt sich, wenn beispielsweise die Zellgröße gering, die Zelldichte sehr groß und die Verteilung der Zellen homogen im aufgeschäumten Polymer ist. Eine weitere Qualitätsverbeserung ergibt sich bei einem geringen Orientierungsgrad der Polymermoleküle.

Der Erfindung liegt daher die Aufgabe zugrunde, das eingangs genannte Verfahren beziehungsweise die eingangs genannte Vorrichtung dahingehend zu verbessern, daß eine kontinuierliche Herstellung von aufgeschäumten Polymer mit mikrozellulärer oder submikrozellulärer Struktur von guter Qualität und ohne Einschränkungen bei der Formgebung möglich ist.

Diese Aufgabe wird gemäß des Verfahrens nach Anspruch 1 dadurch gelöst, daß beim Erzeugen des Druckabfalls zur Steuerung der von der Drossel abgegebenen Polymer/Aufschäummittel-Mischungsmenge eine Durchflußrate der Drossel eingestellt wird und zur Aufrechterhaltung des Druckabfalls unabhängig von der eingestellten Durchflußrate der Eingangsdruck der Drossel in Abhängigkeit vom Ausgangsdruck verändert wird. Weiterhin läßt sich die Aufgabe vorrichtungsmäßig dadurch lösen, daß die Drossel zur Steuerung des Durchsatzes der Polymer/Aufschäummittel-Mischung eine Durchlaßsteuerung aufweist.

Aufgrund der Durchlaßsteuerung sind erzeugter Druckabfall und Durchsatz oder Durchflußrate der Polymer/Aufschäummittel-Mischung voneinenander entkoppelt, so daß auch bei einer Änderung der Durchflußrate der Druckabfall, das heißt, insbesondere die Druckabfallrate, und die Keimbildungsrate konstant gehalten werden können. Dadurch wird auch bei, großem Durchsatz ein End-produkt von guter Qualität erzeugt. Durch den größeren Durchsatz kann die Drossel außerdem nicht nur fadenförmig oder folienförmig Material abgeben, sondern die Ausgangsöffnung der Drossel kann einen relativ großen Querschnitt zur Abgabe einer relativ großen Menge Material aufweisen. Dabei erfolgt aufgrund der aufrechterhaltenden Druckabfallrate und Keimbildungsrate die Keimbildung homogen über den gesamten Querschnitt der Ausgabeöffnung der Drossel.

Weiterhin ergibt sich, daß durch die Steuerung des Durchsatzes oder Durchflusses innerhalb der Drossel diese zur Ausgabe verschiedener Mengen von Material verwendet werden kann. Ein Austausch, wie er bei einer düsenförmigen Drossel zur Änderung des Durchflusses notwendig ist, erübrigt sich. Dadurch ist eine kontinuierliche Herstellung von aufgeschäumten Polymer auch bei unterschiedlichen Mengenanforderungen möglich.

Um den Druckabfall bei Änderung des Durchflusses beziehungsweise der Durchflußrate unabhängig von der eingestellten Durchflußrate aufrecht zu erhalten, kann der Eingangsdruck der Drossel in Abhängigkeit vom Ausgangsdruck verändert werden. Der Ausgangsdruck wird im allgemeinen durch einen von einem nachfolgenden Formwerkzeug gebildeten Widerstand gebildet. Der Eingangsdruck ergibt sich hauptsächlich durch den vor der Drossel in der Extrusionsvorrichtung aufgebauten Druck. Der letztgenannte kann beispielsweise bei einer Extrusionsvorrichtung mit einem wenigstens eine Extruderschnecke aufweisenden Extruder durch Variation der Drehgeschwindigkeit der Extruderschnecke verändert werden.

Vorzugsweise wird als Drossel eine Zahnradpumpe verwendet. Diese dient als Drossel, wenn deren Eingangsdruck größer als deren Ausgangsdruck ist. Die Zahnradpumpe weist wenigstens zwei ineinandergreifende Zahnräder auf, wobei durch die Durchlaßsteuerung die Umdrehungsgeschwindigkeit zumindest eines Zahnrades steuerbar ist. Bei einer Zahnradpumpe als Drossel ergibt sich als weiterer Vorteil, daß der Druckabfall im wesentlichen momentan erfolgt, das heißt, die Druckabfallrate sehr groß ist. Dadurch wird vermieden, daß wie bei einer düsenförmigen Drossel der Druckabfall kontinuierlich über die gesamte Drossellänge erfolgt. Bei der düsenförmigen Drossel ergibt sich dadurch als Nachteil, daß die Keimbildung während der gesamten Zeitperiode auftritt, in der der Druckabfall innerhalb der Drossel stattfindet. Dadurch wachsen zuerst gebildete Keime während der gesamten Zeitperiode, so daß die Keime und damit die späteren Gasbläschen, beziehungsweise Gaszellen unterschiedliche Größen aufweisen, wodurch die Zellgröße inhomogen wird. Weiterhin nehmen die größeren Keime Aufschäummittel auf, das für ein weiteres Keimen und damit zur Erzeugung einer höheren Zelldichte verloren ist.

Die vorangehenden Nachteile können bei einer düsenförmigen Drossel nur dadurch ausgeräumt werden, daß eine Düse mit geringerem Querschnitt und geringerer Länge verwendet wird. Dadurch ergibt sich allerdings als anderer Nachteil, daß durch den geringeren Querschnitt nur eine geringe Menge Polymer ausgegebenen werden kann und daß bei geringem Querschnitt die Scherbeanspruchung der Keime relativ hoch ist. Dadurch werden diese in eine bestimmte Richtung bei der Ausgabe aus der Düse verformt, so daß das aufgeschäumte Endprodukt anisotrope Eigenschaften aufweist. Solche Eigenschaften ergeben sich bei einer solchen

Düse auch dadurch, daß die Polymermoleküle einen hohen Orientierungsgrad aufweisen.

Diese Nachteile treten bei einer Zahnradpumpe als Drossel nicht auf. Weiterhin ist durch den relativ großen Querschnitt der Ausgabeöffnung der Zahnradpumpe gewährleistet, daß ein Verstopfen dieser Drossel, wie es bei düsenförmigen Drosseln stattfinden kann, nicht auftritt.

Die Zahnradpumpe ermöglicht somit durch die nur kurze Verweilzeit des Polymer/Aufschäummittel-Gemisches in der Drossel eine höhere Druckabfallsrate und eine höhere Keimbildungsrate ohne Erhöhung der Scherkräfte, wodurch ein aufgeschäumtes Polymer mit höherer und gleichmäßigerer Zelldichte mit geringer Orientierung der Polymermoleküle herstellbar ist. Dabei ist insbesondere zu beachten, daß der Druckabfall innerhalb der Zahnradpumpe nicht aufgrund von Reibung durch das plastische Fließen des Polymer/Aufschäummittel-Gemisches wie innerhalb einer düsenförmigen Drossel stattfindet. Dadurch sind auch hohe Viskositäten für das Polymer/Aufschäummittel-Gemisch möglich. Daher kann die Zahnradpumpe als Drossel bei einer geringeren Temperatur als eine düsenförmige Drossel arbeiten. Durch die geringere Temperatur werden Keimbildung und Zellenwachstum stabilisiert und ein Zusammenwachsen von Zellen ist weitestgehend verhindert.

Ein vorteilhaftes Ausführungsbeispiel der Erfindung weist eine Steuer- und Auswerteeinheit auf, die Eingangs- und Ausgangsdrücke der Drossel messen und die Umdrehungsgeschwindigkeit eines Zahnrades der Zahnradpumpe als Drossel steuern kann. Dadurch ist in einfacher Weise sowohl der Druckabfall durch Änderung der Umdrehungsgeschwindigkeit der Extruderschnecke aufrecht erhaltbar und die Durchflußrate durch Änderung der Umdrehungsgeschwindigkeit der Zahnräder der Zahnradpumpe variierbar.

Als Extruderschnecke wird bei dem Extruder der Extrusionsvorrichtung eine solche mit wenigstens einem Zuführabschnitt, einem Plastifizierabschnitt und einem Mischabschnitt verwendet. Im Zuführabschnitt wird das Polymer in Form zerkleinerter Polymerteilchen, insbesondere als Granulat, zugeführt. Im anschließenden Plastifizierabschnitt wird durch zusätzliche Wärmezufuhr das Polymer aufgeschmolzen und als Polymerschmelze dem Mischabschnitt zugeführt. In dem Mischabschnitt erfolgt das Vermischen des durch eine Zuführeinrichtung dem Extruder zugeführten Aufschäummittels mit der Polymerschmelze.

In diesem Zusammenhang erweist es sich als Vorteil, wenn im Zuführabschnitt in einem die Extruderschnecke umgebenden Extrudermantel im wesentlichen in Transportrichtung oder axialer Richtung der Extruderschnecke verlaufende Vertiefungen oder Nuten ausgebildet sind. Dadurch ergibt sich eine erhöhte Reibung zwischen Extrudermantel und Polymerteilchen, weil entlang der Vertiefungen transportierte Polymerteilchen und durch die Extruderschnecke direkt transportierte Polymerteilchen an einander reiben und sich verklemmen. Dadurch wird der Druck innerhalb der Extrusionsvorrichtung beziehungsweise innerhalb des Extruders auf einen Maximaldruck erhöht und ein höherer Transportwirkungsgrad als bei einem glatten extrudermantel beziehungsweise Extruderzylinder erreicht.

Vorzugsweise sind die Nuten konisch und mit in Transportrichtung abnehmender Tiefe ausgebildet, wobei sie im Zuführabschnitt enden. In Umfangsrichtung des Extrudermantels können die Nuten gleich beabstandet angeordnet sein.

Die Verwendung eines solchen im Zuführabschnitt genuteten Extruders weist insbesondere in Kombination mit der Zahnradpumpe als Drossel eine Reihe von Vorteilen auf.

Dadurch, daß der Maximaldruck innerhalb des Extruders bereits im wesentlichen am Ende des Zuführabschnitts der Extruderschnecke erreicht wird, findet ein Rückfluß von Aufschäummittel entlang der Extruderschnecke in Richtung des Zuführabschnitts nicht statt. Bei einem solchen Rückfluß ergibt sich als Nachteil, daß Wärme in Richtung Zuführabschnitt transportiert wird, wodurch die Polymerteilchen oder das Granulat bereits in einem Trichter zum Zuführen des Polymers zum Extruder schmelzen werden können. Weiterhin besteht bei einem Rückfluß die Gefahr, daß Polymerteilchen explosiv aus dein Zuführtrichter ausgestoßen werden, wodurch neben einer Beeinträchtigung der Funktion der Extrusionsvorrichtung eine hohe Verletzungsgefahr für Bedienpersonen dieser Vorrichtung besteht. Dabei ist zu beachten, daß der Druck bei mikro- oder submikrozellulärer Extrusion wesentlich höher als bei konventioneller Schaumextrusion ist, da zusätzlich zum normalen Extrusionsdruck noch der sogenannte Nukleierungsdruck aufgebaut werden muß. Dieser ist zur Keimbildung nötig.

Der im Zuführabschnitt aufgebaute Maximaldruck ist wesentlich höher als der in einem Extruder ohne Vertiefungen oder Nuten im Zuführabschnitt maximal aufbaubare Druck. Dadurch ist selbst nach einem gewissen Druckabfall entlang des Plastifizierabschnitts und anschließend entlang des Mischabschnitts der Druck im Extruder so hoch, daß eine größere Menge Aufschäummittel im Vergleich zu Extrudern mit glatten Extruderzylindern im Polymer lösbar ist. Durch diese erhöhte Lösbarkeit ergibt sich in der Folge eine höhere Keimbildungsdichte, beziehungsweise Zelldichte in Verbindung mit geringeren Zellgrößen. Weiterhin ist in Kombination mit der Zahnradpumpe als Drossel ein höherer Arbeitsdruck ohne eine Verminderung der Durchflußrate in der Drossel möglich. Bei den bisherigen düsenförmigen Drosseln ist eine Erhöhung des Arbeitsdrucks nur durch eine Verminderung des öffnungsquerschnitts innerhalb der Drossel möglich. Dies hat sowohl ökonomische als auch verfahrenstechnische Nachteile.

Um zu verhindern, daß im Zuführabschnitt durch die auftretende Reibung die Temperatur möglicherweise bereits so weit ansteigt, daß ein Schmelzen der Polymerteilchen einsetzt, weist die Extrusionsvorrichtung in diesem Abschnitt eine Temperiereinrichtung, vorzugsweise eine Kühleinrichtung auf. Dadurch ist einerseits gewährleistet, daß tatsächlich der Maximaldruck durch innere Reibung aufgebaut werden kann und andererseits erst im Plastifizierabschnitt die Polymerschmelze hergestellt wird.

Um zu verhindern, daß noch ungeschmolzene Polymerteilchen bis in den Mischungsabschnitt gelangen, sind im Plastifizierungsabschnitt der Extruderschnecke Scherelemente angeordnet, die diese ungeschmolzenen Teilchen zurückhalten.

Nach dem Plastifizierungsabschnitt wird der Polymerschmelze von der Zuführeinrichtung für das Aufschäummittel dieses zudosiert. Dazu weist die Zuführeinrichtung eine Zuführleitung auf, die den Extrudermantel durchsetzt und im Bereich des Mischabschnitts der Extruderschnecke mündet. Wird das Aufschäummittel beispielsweise einer als Dosierpumpe verwendeten Membranpumpe flüssig zugeführt, ist eine genaue Dosierung möglich. Zur Verflüssigung des Aufschäummittels kann die Zuführeinrichtung neben der Dosierpumpe einen Verflüssiger aufweisen.

Nach Zufuhr des Aufschäummittels wird das Polymer/Aufschäummittel-Gemisch im Mischabschnitt der Extruderschnecke vorzugsweise durch entsprechende Mischelemente zu einer einphasigen Lösung gemischt. Um die Homogenität der Lösung zu verbessern, kann sich an den Mischabschnitt ein Homogenisier- und Kühlabschnitt der Extruderschnecke anschließen.

Mischabschnitt und Homogenisier- und Kühlabschnitt der Extruderschnecke bilden eine Mischeinrichtung des Extruders. Bei der Mischung wird die Viskosität verringert, so daß zur Aufrechterhaltung einer passenden Viskosität für die gesättigte Polymerschmelze eine Abkühlung der einphasigen Lösung durchgeführt werden muß. Durch die Verwendung der Mischelemente im Mischabschnitt und dem Homogenisier- und Kühlabschnitt ist dabei sichergestellt, daß nicht nur äußere Schichten der Lösung abgekühlt werden, während innerhalb der gesättigten Polymerschmelze eine zu hohe Temperatur und damit eine zu geringe Viskosität vorliegt. Dies würde andernfalls zu Inhomogenitäten beim Endprodukt führen. Durch die Misch- und gegebenenfalls weitere Scherelemente in den vorgenannten Abschnitten erfolgt statt einer Abkühlung über Wärmeleitung eine Abkühlung über Konvektion. Dies führt zu einer gleichmäßigen Abkühlung der gesättigten Polymerschmelze über ihren gesamten Querschnitt, so daß die Homogenität des Endprodukts sichergestellt ist.

Im Zusammenhang mit dem speziellen bei der Erfindung verwendeten Extruder sei nochmals darauf hingewiesen, daß aufgrund des hohen, bereits im Zuführabschnitt der Extruderschnecke aufgebrauten Maximaldruckes mehr Aufschäummittel der Polymerschmelze zugeführt werden kann, wobei die Diffusionszeit oder Zeit bis zur Sättigung der Polymerschmelze verringert ist. Weiterhin kann bei gleichem Durchfluß, beziehungsweise gleicher Durchflußrate im Vergleich zu einem Extruder ohne Vertiefungen oder Nuten im Zuführabschnitt der Extruderschnecke ein kleinerer Extruder verwendet werden.

An dieser Stelle sei weiterhin angemerkt, daß statt nur eines Extruders beispielsweise zwei hintereinander angeordneter Extruder verwendet werden können, wobei ein erster Extruder beispielsweise eine Extruderschnecke mit Zuführabschnitt, Plastifizierabschnitt und Mischabschnitt und ein zweiter Extruder eine Extruderschnecke mit Homogenisier- und Kühlabschnitt aufweist. Ebenso ist es möglich bei einem oder zwei Extrudern statt nur einer Extruderschnecke zwei parallel angeordnete Extruderschnecken zu verwenden.

Zur Formung des Endprodukts schließt sich an die Drossel in Transportrichtung ein Formgebungswerkzeug an, das vorzugsweise zweigeteilt ist und aus hintereinander in Transportrichtung angeordneter Formmatrize und Feinzugmatrize gebildet ist.

In diesem Zusammenhang ist es insbesondere günstig, wenn die Formmatrize einen Verteilkanal mit im Vergleich zum Querschnitt ihrer Ausgabeöffnung größerem Querschnitt aufweist. Dadurch ist sichergestellt, daß die Polymer/Aufschäummittel-Mischung nach dem Druckabfall in der Drossel die Formmatrize im wesentlichen ohne weiteren Druckabfall durchläuft und erst beim Verlassen der Formmatrize ein weiteres Aufschäumen durch den hier stattfindenden Druckabfall stattfindet. Dabei ist weiterhin darauf zu achten, daß der Verteilkanal der Formmatrize eine relativ geringe Länge aufweist.

Durch diese spezielle Formmatrize wird verhindert, daß das mit der Keimbildung einsetzende Zellwachstum zu früh und zu schnell stattfindet. Durch zu frühes Zellwachstum würden große Zellen im weiteren Ausformprozeß deformiert werden. Kleine Zellen werden stattdessen aufgrund ihrer viel höheren Oberflächenspannung viel weniger deformiert. Ein weiteres Aufschäumen des Polymers erfolgt vorzugsweise erst bei der Ausgabe durch die Formmatrize.

In der anschließenden Feinzugmatrize wird dem weiter aufgeschäumten Polymer die endgültige Form gegeben und somit das Endprodukt erzeugt. Um in diesem Zusammenhang das Endprodukt mit einer guten Oberfläche zu versehen, weist die Feinzugmatrize eine Kühleinrichtung auf. Diese kann als Kühlmedium Luft oder Wasser verwenden. Durch die Kühleinrichtung wird direkt in der Feinzugmatrize die Oberfläche des aufgeschäumten Polymers abgekühlt, so daß oberflächennahe Zellen nach Fertigstellung des Endprodukts nicht weiter wachsen und möglicherweise explodieren können.

Zur weiteren Abkühlung des Endprodukts kann sich in Transportrichtung eine weitere Kühleinrichtung an die Feinzugmatrize anschließen.

Als Polymermaterial können gemäß der Erfindung die üblichen bei Extrudern verwendeten Materialien verwendet werden, wie beispielsweise Polyethylen, Polypropylen und Polystyren.

Im folgenden wird ein vorteilhaftes Ausführungsbeispiel der Erfindung anhand der in der Zeichnung beigefügten Figuren näher erläutert.

Es zeigen:
- Figur 1: einen Längsschnitt durch eine Extrusionsvorrichtung gemäß der Erfindung, und
- Figur 2: ein Diagramm zur Darstellung des Druckprofils entlang der Extrusionsvorrichtung nach Figur 1.

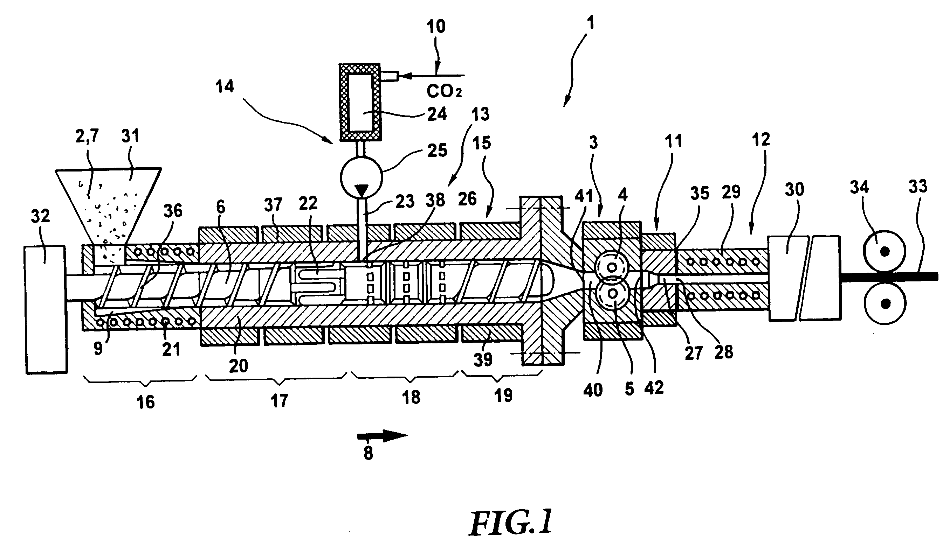

In Figur 1 ist eine erfindungsgemäße Extrusionsvorrichtung 1 im Längsschnitt dargestellt. In Transportrichtung 8 sind hintereinander eine Motor-Getriebeeinheit 32, ein Extruder 13, eine Zahnradpumpe 3 als Drossel, ein aus Formmatrize 11 und Feinzugmatrize 12 gebildetes Formgebungswerkzeug, eine Kühleinrichtung 30 und Transportrollen 34 dargestellt.

Die Motor-Getriebeeinheit 32 dreht eine Extruderschnecke 6 des Extruders 13, wobei deren Drehachse parallel zur Transportrichtung 8 angeordnet ist. Die Extruderschnecke 6 ist drehbar in einem sie umgebenden Extrudermantel 20 gelagert. An einem der Motor-Getriebeeinheit 32 benachbarten Ende des Extruders 13 ist ein Einfülltrichter 31 angeordnet. Durch diesen ist der Extruderschnecke 6 ein Polymer 2 in Form zerkleinerter Polymerteilchen 7 insbesondere in Form von Granulat zuführbar.

Die Extruderschnecke 6 weist mehrere in axialer beziehungsweise Transportrichtung 8 hintereinander angeordnete Funktionsabschnitte auf. Im Bereich des Einfülltrichters 31 weist die Extruderschnecke 6 einen Zuführabschnitt 16 auf. An diesen schließen sich hintereinander ein Plastifizierabschnitt 17, ein Mischabschnitt 18 und ein Homogenisier- und Kühlabschnitt 19 an. Im Bereich des Zuführabschnitts 16 sind im Extrudermantel 20 nutenförmige Vertiefungen 9 ausgebildet. Diese sind konisch ausgebildet und verlaufen mit abnehmender Tiefe in Richtung zum Plastifizierabschnitt 17, wobei die Nuten im Zuführabschnitt 16 enden. Im Extrudermantel 20 ist im Zuführabschnitt 16 der Extruderschnecke 6 eine Kühleinrichtung 21 angeordnet, durch die ein Kühlmedium beispielsweise entlang einer Kühlschlange bewegbar ist.

Die nutenförmigen Vertiefungen 9 sind im Extrudermantel 20 in Umfangsrichtung gleich beabstandet um die Extruderschnecke 6 angeordnet, wobei in den nutenfreien Bereichen des Extrudermantels 20 eine Transportwendel der Extruderschnecke 6 im Zuführabschnitt 16 wie auch in den übrigen Abschnitten 17, 18 und 19 in geringem Abstand zu einer Innenfläche des Extrudermantels 20 angeordnet ist.

In dem Plastifizierabschnitt 17 ist die Transportwendel 36 durch auf der Extruderschnecke 6 angeordnete Scherelemente 22 unterbrochen. Diese erstrecken sich bis benachbart zu einer Mündung 38 einer Zuführleitung 23, die den Extrudermantel 20 durchsetzt. Zum Aufheizen der durch die Transportwendel 36 in den Plastifizierabschnitt 16 transportierten Polymerteilchen 7 ist um den Extrudermantel 20 eine Heizung 37 angeordnet.

Über die Zuführleitung 23 wird der im Plastifizierabschnitt 17 aus den Polymerteilchen 7 gebildeten Polymerschmelze über eine Membranpumpe 25 als Dosierpumpe ein Aufschäummittel 10 zugeführt. Bei dem dargestellten Ausführungsbeispiel ist das Aufschäummittel 10 Kohlendioxid (CO₂). Dieses wird von einer nichtdargestellten Quelle einem Verflüssiger 24 der Aufschäummittelzuführeinrichtung 14 und von diesem der Dosierpumpe 25 zugeführt.

Im Mischabschnitt 18 der Extruderwelle 6, in dem das Aufschäummittel 10 über Mündung 38 der Polymerschmelze zugeführt wird, weist die Extruderschnecke 6 eine Anzahl von Mischelementen 26 auf, durch die eine einphasige Lösung von Polymerschmelze und Aufschäummittel herstellbar ist. Zur weiteren und innigen Mischung schließt sich an den Mischabschnitt 18 der Homogenisier- und Kühlabschnitt 19 an, in dem die Transportwendel 36 der Extruderschnecke 6 fortgesetzt ist. Mischabschnitt 18 und Homogenisier- und Kühlabschnitt 19 bilden eine Mischeinrichtung 15 der Extrusionsvorrichtung 1, beziehungsweise des Extruders 13. Zur Kühlung des Polymer/Aufschäummittel-Gemisches ist zumindest im Homogenisier- und Kühlabschnitt 19 um den Extrudermantel 20 eine Kühleinrichtung 39 angeordnet.

An den Homogenisier- und Kühlabschnitt 19 schließt sich ein trichterförmig in Richtung Zahnradpumpe 3 zulaufendes Ende des Extruders 13 an. Dieses steht mit einem Kanal 40 innerhalb der Zahnradpumpe 3 über eine Eingangsöffnung 41 des Kanals in Verbindung. Der Kanal weist im wesentlichen konstanten Querschnitt entlang der Transportrichtung 8 auf und endet mit einer Ausgangsöffnung 42. Die Zahnradpumpe 3 dient als Drossel, da ein Eingangsdruck an Eingangsöffnung 41 größer als ein Ausgangsdruck an Ausgangsöffnung 42 ist. Innerhalb der Zahnradpumpe 3 findet ein Druckabfall statt.

Zur Weiterbeförderung des der Zahnradpumpe 3 durch den Extruder 13 zugeführten Polymer/Aufschäummittel-Gemisches sind ein erstes und ein zweites Zahnrad 4, 5 innerhalb der Zahnradpumpe 3 angeordnet. Diese sind miteinander in Eingriff und um senkrecht zur Figurenebene verlaufende Drehachsen drehbar gelagert. Ein Motor und eine die Drehzahl beziehungsweise Umdrehungsgeschwindigkeit der Zahnräder steuernde Durchlaßsteuerung sind in Figur 1 zur Vereinfachung nicht dargestellt. Aufgrund der Durchlaßsteuerung ist eine Durchflußrate für das Polymer/Aufschäummittel-Gemisch durch die Zahnradpumpe 3 einstellbar. Die Durchlaßsteuerung kann separat ausgebildet sein oder Teil einer nichtdargestellten Steuer- und Auswerteeinheit sein. Diese kann sowohl die Drehzahl der Zahnräder 4, 5, als auch die Drehzahl beziehungsweise Umdrehungsgeschwindigkeit der Extruderschnecke 6 mittels der Motor- Getriebeeinheit 32 steuern. Weiterhin sind mit der Steuer- und Auswerteeinheit Drucksensoren (nicht dargestellt) zur Messung des Drucks an Eingangsöffnung 41 und an Ausgangsöffnung 42 verbindbar. Mittels der Drucksensoren und der Steuer- und Auswerteeinheit ist der Druckabfall über der als Drossel arbeitenden Zahnradpumpe 3 meßbar und durch Variation der Drehzahl der Extruderschnecke 6 auch bei Veränderung der Drehzahl der Zahnräder 4, 5 aufrechterhaltbar.

An die Zahnradpumpe 3 schließt sich in Transportrichtung 8 die Formmatrize 11 an. Diese weist in ihrem Inneren einen Verteilkanal 27 auf, der an seinem der Zahnradpumpe 3 benachbarten Ende einen zur Ausgangsöffnung 42 entsprechenden Querschnitt und an seinem gegenüberliegenden Ende eine Ausgabeöffnung 28 mit geringem Querschnitt aufweist. An die Formmatrize 11 schließt sich die Feinzugmatrize 12 an, wobei zwischen beiden eine thermische Isolierung 35 angeordnet ist. Innerhalb der Feinzugmatrize 12 wird der Verteilkanal 27 der Formmatrize 11 mit zu deren Ausgabeöffnung 28 entsprechendem Querschnitt fortgesetzt. Zur Kühlung des der Feinzugmatrize 12 zugeführten Polymer/Aufschäummittel-Gemisches weist diese eine Kühleinrichtung 29 auf, welche in Form einer Wendel ausgeführt sein kann. Innerhalb der Kühleinrichtung 29 kann als Kühlmedium Luft oder Wasser zirkulieren.

Zur weiteren Kühlung des Polymer/Aufschäummittel-Gemisches ist eine weitere Kühleinrichtung 30 in Transportrichtung 8 nach der Feinzugmatrize 12 angeordnet. Von der Kühleinrichtung 30 wird ein Endprodukt 33 aus aufgeschäumten Polymer und geformt durch Formmatrize 11 und Feinzugmatrize 12 ausgegeben und durch beidseitig zum Endprodukt 33 angeordnete Transportrollen 34 abtransportiert.

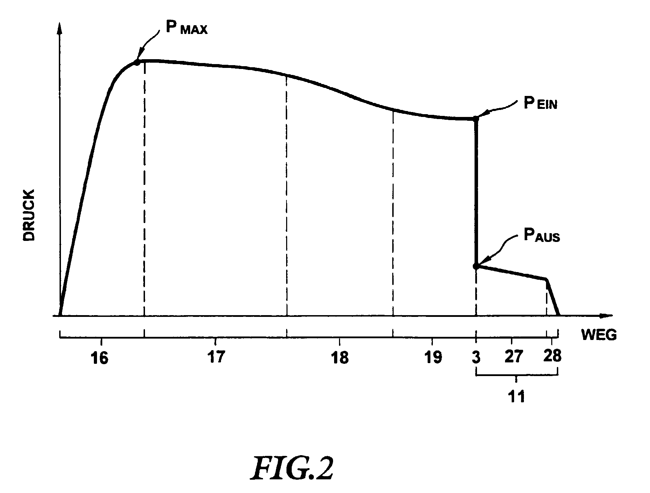

In Figur 2 ist ein Diagramm zur Darstellung eines Druckprofils entlang der Extrusionsvorrichtung 1 nach Figur 1 wiedergegeben.

Auf der horizontalen Achse ist der Weg des Polymer/Aufschäummittel-Gemisches entlang Transportrichtung 8 durch Zuführabschnitt 16, Plastifizierabschnitt 17, Mischabschnitt 18, Homogenisier- und Kühlabschnitt 19, Zahnradpumpe 3, und die aus Verteilkanal 27 und Ausgabeöffnung 28 gebildete Formmatrize 11 dargestellt. Auf der vertikalen Achse ist der entlang dieses Weges auftretende Druck dargestellt.

Aufgrund der inneren Reibung der durch die Transportwendel 36 und der entlang der nutenförmigen Vertiefungen 9 transportierten Polymerteilchen, erfolgt im Zuführabschnitt 16 ein schneller Druckanstieg bis auf einen Maximaldruck P_{MAX}. In den weiteren Abschnitten 17, 18, 19 erfolgt ein geringer Druckabfall bis auf einen Wert Pₑᵢₙ an der Eingangsöffnung 41 der Zahnradpumpe 3, siehe Figur 1. Innerhalb der Zahnradpumpe 3 erfolgt in kurzer Zeit und über einen kurzen Weg in Transportrichtung 8 ein Druckabfall von Pₑᵢₙ auf Pₐᵤₛ, wobei Pₐᵤₛ der Druck an der Ausgangsöffnung 42 der Zahnradpumpe 3, siehe ebenfalls Figur 1 ist.

Dieser Druckabfall führt zur Keimbildung innerhalb des Polymer/Aufschäummittel-Gemisches, wobei aus diesen Keinen im weiteren Verlauf größerwerdende Bläschen oder Zellen entstehen, die zu einem Aufschäumen des Polymers führen.

Innerhalb der Formmatrize 11 erfolgt entlang ihres Verteilkanals 27 ein geringer Druckabfall und weiterer größerer Druckabfall auf Umgebungsdruck im wesentlichen an Ausgabeöffnung 28 der Formmatrize 11.

Insbesondere der letzte Druckabfall führt zu einem Größerwerden der Keime und damit zu einem Anwachsen der Gasbläschen oder Zellen, so daß das Polymer weiter aufgeschäumt wird und anschließend zur Stabilisierung der Oberfläche in der Feinzugmatrize 12, siehe Figur 1, oberflächlich abgekühlt wird.

Aufgrund der speziellen Druckprofile nach Figur 2 ergibt sich ein hoher Schmelzdruck im Plastifizierabschnitt 17, wodurch die Scher- und gegebenenfalls Mischelemente in diesem Abschnitt besser einsetzbar sind. Weiterhin ergibt sich ein hoher Sättigungsdruck im Mischabschnitt 18, wodurch mehr Aufschäummittel schneller in die Polymerschmelze eindiffundieren kann. Durch den hohen Eingangsdruck der Zahnradpumpe und die hohe Druckabfallrate ist weiterhin eine hohe Keimbildungsrate gegeben. Der Maximaldruck ergibt sich bereits am Ende des Zuführabschitts 16 der Extruderschnecke. Durch die hohe Druckabfallrate innerhalb der Zahnradpumpe ist weiterhin gewährleistet, daß die Keimbildung über den Querschnitt des ausgegebenen Materials und in Transportrichtung homogen ist, so daß ein aufgeschäumtes Polymer als Endprodukt mit mikrozellulärer oder submikrozellulärer Struktur und isotropen Eigenschaften erhalten wird.

## Patentansprüche

1. Verfahren zur Herstellung eines aufgeschäumten Polymers mittels einer Extrusionsvorrichtung (1) mit den folgenden Schritten:
i) Zuführen des Polymers (2) zur Extrusionsvorrichtung (1);
ii) Schmelzen des Polymers;
iii) Zuführen eines Aufschäummittels zur Polymerschmelze in der Extrusionsvorrichtung unter bestimmtem Druck und mit bestimmter Temperatur;
iv) Mischen von Aufschäummittel und Polymerschmelze;
v) Kühlen der Polymer/Aufschäummittel-Mischung;
vi) Erzeugen eines Druckabfalls als Druckdifferenz zwischen Eingangsdruck und Ausgangsdruck einer Drossel (3) zur Zellkeimbildung innerhalb der Mischung, und
vii) Formen und Aufschäumen des Polymers durch Wachsenlassen der Zellkeime und zumindest teilweises entmischen von Aufschäummittel und Polymer, sowie Stabilisieren des aufgeschäumten Polymers durch Abkühlen,
**dadurch gekennzeichnet**,
daß im Schritt vi) zur Steuerung der von der Drossel abgegebenen Polymer/Aufschäummittel-Mischungsmenge eine Durchflußrate der Drossel eingestellt wird und zur Aufrechterhaltung des Druckabfalls unabhängig von der eingestellten Durchflußrate der Eingangsdruck der Drossel (3) in Abhängigkeit vom Ausgangsdruck verändert wird.

2. Verfahren nach Anspruch 1,
**dadurch gekennzeichnet**,
daß die Durchflußrate durch Variation einer Umdrehungsgeschwindigkeit eines ersten Zahnrads (4) einer als Drossel (3) arbeitenden Zahnradpumpe eingestellt wird.

3. Verfahren nach Anspruch 1 oder 2,
**dadurch gekennzeichnet**,
daß Eingangs- und Ausgangsdruck der Drossel (3) durch eine Steuer- und eine Auswerteeinrichtung ermittelt werden.

4. Verfahren nach wenigstens einem der vorangehenden Ansprüche,
**dadurch gekennzeichnet**,
daß der Eingangsdruck der Drossel (3) durch Variation einer Drehgeschwindigkeit einer Extruderschnecke (6) der Extrusionsvorrichtung (1) verändert wird.

5. Verfahren nach wenigstens einem der vorangehenden Ansprüche,
**dadurch gekennzeichnet**,
daß die Steuer- und Auswerteeinheit die Umdrehungsgeschwindigkeit des ersten Zahnrades (4) und/oder der Extruderschnecke (6) steuert.

6. Verfahren nach wenigstens einem der vorangehenden Ansprüche, wobei das Polymer (2) in Form zerkleinerter Polymerteilchen, insbesondere als Granulat, zugeführt wird,
**dadurch gekennzeichnet**,
daß vor Schritt ii) durch innere Reibung zwischen denen in Richtung zur Drossel (3) durch die Extruderschnecke (6) transportierten Polymerteilchen der Druck innerhalb der Extrusionsvorrichtung (1) auf einen Maximaldruck erhöht wird.

7. Verfahren nach wenigstens einem der vorangehenden Ansprüche,
**dadurch gekennzeichnet**,
daß ein erster Teil der transportierten Polymerteilchen entlang von in im wesentlichen in Transportrichtung verlaufenden Vertiefungen und der zweite Teil direkt durch die Extruderschnecke (6) bewegt wird.

8. Verfahren nach wenigstens einem der vorangehenden Ansprüche,
**dadurch gekennzeichnet**,
daß die Polymerteilchen in dem Bereich, wo die Druckerhöhung in der Extrusionsvorrichtung (1) auf den Maximaldruck stattfindet, temperiert werden.

9. Verfahren nach wenigstens einem der vorangehenden Ansprüche,
**dadurch gekennzeichnet**,
daß das Aufschäummittel im Schritt iii) der Polymerschmelze flüssig zudosiert wird.

10. Verfahren nach wenigstens einem der vorangehenden Ansprüche,
**dadurch gekennzeichnet**,
daß im Schritt vii) die Polymer/Aufschäummittel-Mischung eine erste Formmatrize im wesentlichen ohne Druckabfall durchläuft und bei Verlassen der Formmatrize aufschäumt.

11. Verfahren nach Anspruch 10,
**dadurch gekennzeichnet**,
daß das aufgeschäumte Polymer direkt einer Feinzugmatrize (12) zur Herstellung eines Endprodukts zugeführt wird.

12. Verfahren nach wenigstens einem der vorangehenden Ansprüche,
**dadurch gekennzeichnet**,
daß das aufgeschäumte Polymer in und/oder nach der Feinzugmatrize (12) gekühlt wird.

13. Extrusionsvorrichtung (1) zur Herstellung eines aufgeschäumten Polymers mit zumindest einem Extruder (13), welcher wenigstens eine das Polymer transportierende Extruderschnecke (6) aufweist, einer Aufschäummittelzuführeinrichtung (14) zur Zuführung eines Aufschäummittels (10) zu einer Polymerschmelze im Extruder (13), einer Mischeinrichtung (15) zum Mischen von Polymerschmelze und Aufschäummittel, einer Drossel (3) zur Erzeugung eines Druckabfalls in der zugeführten Polymer/Aufschäummittel-Mischung und einem Formgebungswerkzeug,
**dadurch gekennzeichnet**,
daß zur Steuerung des Durchsatzes der Polymer/Aufschäummittel-Mischung die Drossel eine Durchlaßsteuerung aufweist.

14. Vorrichtung nach Anspruch 13,
**dadurch gekennzeichnet**,
daß die Drossel (3) als Zahnradpumpe mit wenigstens zwei ineinander greifenden Zahnrädern (4, 5) ausgebildet ist, wobei durch die Durchlaßsteuerung die Umdrehungsgeschwindigkeit zumindest eines Zahnrades gesteuert ist.

15. Vorrichtung nach Anspruch 13 oder 14,
**dadurch gekennzeichnet**,
daß die Extrusionsvorrichtung (1) zur Messung von Eingangsdruck und Ausgangsdruck der Drossel (3) eine Steuer- und Auswerteeinheit aufweist.

16. Vorrichtung nach wenigstens einem der Ansprüche 13 bis 15,
**dadurch gekennzeichnet**,
daß eine Umdrehungsgeschwindigkeit der Extruderschnecke (6) von der Steuer- und Auswerteeinheit gesteuert ist.

17. Vorrichtung nach wenigstens einem der Ansprüche 13 bis 16, wobei die Extruderschnecke (6) wenigstens einen Zuführabschnitt (16), einen Plastifizierabschnitt (17) und einen Mischabschnitt (18) aufweist,
**dadurch gekennzeichnet**,
daß im Zuführabschnitt (16) in einem die Extruderschnecke (6) umgebenden Extrudermantel (20) im wesentlichen in Transport- oder axialer Richtung der Extruderschnecke verlaufende Nuten (9) ausgebildet sind.

18. Vorrichtung nach wenigstens einem der Ansprüche 13 bis 17,
**dadurch gekennzeichnet**,
daß die Nuten (9) konisch und mit in Transportrichtung abnehmender Tiefe ausgebildet sind, wobei sie im Zuführabschnitt (16) enden.

19. Vorrichtung nach wenigstens einem der Ansprüche 13 bis 18,
**dadurch gekennzeichnet**,
daß die Extrusionsvorrichtung (1) im Bereich des Zuführabschnitts (16) der Extruderschnecke (6) eine Temperiereinrichtung (21) aufweist.

20. Vorrichtung nach wenigstens einem der Ansprüche 13 bis 19,
**dadurch gekennzeichnet**,
daß im Plastifizierungsabschnitt (17) der Extruderschnecke (6) Scherelemente (22) angeordnet sind.

21. Vorrichtung nach wenigstens einem der Ansprüche 13 bis 20,
**dadurch gekennzeichnet**,
daß die Zuführeinrichtung (14) für das Aufschäummittel eine Zuführleitung (23) aufweist, die den Extrudermantel (20) durchsetzt und im Bereich des Mischabschnitts (18) der Extruderschnecke (6) mündet.

22. Vorrichtung nach wenigstens einem der Ansprüche 13 bis 21,
**dadurch gekennzeichnet**,
daß die Zuführeinrichtung (14) einen Verflüssiger (24) und eine Dosierpumpe (25) aufweist.

23. Vorrichtung nach wenigstens einem der Ansprüche 13 bis 22,
**dadurch gekennzeichnet**,
daß im Mischabschnitt (18) der Extruderschnecke (6) Mischelemente (26) angeordnet sind.

24. Vorrichtung nach wenigstens einem der Ansprüche 13 bis 23,
**dadurch gekennzeichnet**,
daß sich an den Mischabschnitt (18) ein Homogenisier- und Kühlabschnitt (19) der Extruderschnecke (6) anschließt.

25. Vorrichtung nach wenigstens einem der Ansprüche 13 bis 24,
**dadurch gekennzeichnet**,
daß das Formgebungswerkzeug (11, 12) zweigeteilt und aus hintereinander in Transportrichtung angeordneter Formmatrize (11) und Feinzugmatrize (12) gebildet ist.

26. Vorrichtung nach wenigstens einen der Ansprüche 13 bis 25,
**dadurch gekennzeichnet**,
daß die Formmatrize (11) einen Führungskanal (27) mit im Vergleich zum Querschnitt einer Ausgabeöffnung (28) größeren Querschnitt aufweist.

27. Vorrichtung nach wenigstens einem der Ansspüche 13 bis 26,
**dadurch gekennzeichnet**,
daß die Feinzugmatrize (12) eine Kühleinrichtung (29) aufweist.

28. Vorrichtung nach wenigstens einem der Ansprüche 13 bis 27,
**dadurch gekennzeichnet**,
daß in Transportrichtung hinter der Feinzugmatrize (12) eine weitere Kühleinrichtung (30) angeordnet ist.

29. Vorrichtung nach wenigstens einem der Ansprüche 13 bis 28,
**dadurch gekennzeichnet**,
daß zwei Extruder (13) hintereinander angeordnet sind, wobei im ersten Extruder die Plastifizierung und Mischung und im zweiten Extruder die Homogenisierung und Kühlung erfolgt.

## Claims

1. A process for producing a foamed polymer by means of an extrusion apparatus (1), the process comprising the steps of:
i) supplying said polymer (2) to said extrusion apparatus (1);
ii) melting said polymer;
iii) supplying a foaming agent to said polymer melt in said extrusion apparatus at a specific pressure and a specific temperature;
iv) mixing said foaming agent and polymer melt;
v) cooling said mixture of polymer and foaming agent;
vi) producing a pressure drop as a pressure difference between input pressure and output pressure of a throttle (3) for cell nucleation within said mixture; and
vii) shaping and foaming said polymer by making the nuclei grow and by demixing foaming agent and polymer at least in part, and stabilizing the foamed polymer by cooling,
**characterized in**
that a flow rate of said throttle is adjusted in step vi) for controlling the mixing amount of polymer and foaming agent supplied by said throttle, and the input pressure of said throttle (3) is varied in response to the output pressure to maintain the pressure drop independently of the set flow rate.

2. A process according to claim 1,
**characterized in**
that the flow rate is adjusted by varying the rotational speed of a first gear (4) of a gear pump operating as said throttle (3).

3. A process according to claim 1 or 2,
**characterized in**
that input pressure and output pressure of said throttle (3) are determined by a control and evaluation device.

4. A process according to at least one of the preceding claims,
**characterized in**
that the input pressure of said throttle (3) is varied by varying a rotational speed of an extruder screw (6) of said extrusion apparatus (1).

5. A process according to at least one of the preceding claims,
**characterized in**
that said control and evaluation device controls the rotational speed of said first gear (4) and/or said extruder screw (6).

6. A process according to at least one of the preceding claims, with said polymer (2) being fed in the form of comminuted polymer particles, especially as pellets,
**characterized in**
that prior to step ii) the pressure inside said extrusion apparatus (1) is raised to a maximum pressure by internal friction between the polymer particles transported by said extruder screw (6) towards said throttle (3).

7. A process according to at least one of the preceding claims,
**characterized in**
that a first part of the transported polymer particles is moved along recesses extending essentially in the direction of transportation, and a second part is directly moved through said extruder screw (6).

8. A process according to at least one of the preceding claims,
**characterized in**
that said polymer particles are tempered in the area where the pressure is raised to its maximum level inside said extrusion apparatus (1).

9. A process according to at least one of the preceding claims,
**characterized in**
that in step iii) said foaming agent is fed to said polymer melt in metered amounts and in liquid form.

10. A process according to at least one of the preceding claims,
**characterized in**
that in step vii) said mixture of polymer and foaming agent passes through a first shaping die essentially without any pressure drop and is foamed when leaving said shaping die.

11. A process according to claim 10,
**characterized in**
that said foamed polymer is directly fed to a sizing die (12) for producing a final product.

12. A process according to at least one of the preceding claims,
**characterized in**
that said foamed polymer is cooled in and/or after said sizing die (12).

13. An extrusion apparatus (1) for producing a foamed polymer, comprising at least one extruder (13) which includes at least one extruder screw (6) for transporting said polymer, a foaming-agent feeder (14) for feeding a foaming agent (10) to a polymer melt in said extruder (13), a mixer (15) for mixing polymer melt and foaming agent, a throttle (3) for producing a pressure drop inside the mixture of polymer and foaming agent fed, and a molding tool,
**characterized in**
that said throttle comprises a flow controller for controlling the throughput of said mixture of polymer and foaming agent.

14. An apparatus according to claim 13,
**characterized in**
that said throttle (3) is formed as a gear pump comprising at least two meshing gears (4, 5), the rotational speed of at least one gear being controlled by means of said flow controller.

15. An apparatus according to claim 13 or 14,
**characterized in**
that said extrusion apparatus (1) comprises a control and evaluation unit for measuring input pressure and output pressure of said throttle (3).

16. An apparatus according to at least one of claims 13 to 15,
**characterized in**
that a rotational speed of said extruder screw (6) is controlled by said control and evaluation unit.

17. An apparatus according to at least one of claims 13 to 16, said extruder screw (6) comprising at least one feed section (16), a plasticating section (17), and a mixing section (18),
**characterized in**
that in said feed section (16) grooves (9) which extend essentially in the direction of transportation or in the axial direction of said extruder screw are formed in an extruder barrel (20) which surrounds said extruder screw (6).

18. An apparatus according to at least one of claims 13 to 17,
**characterized in**
that said grooves (9) are made conical and given a depth which decreases in the direction of transportation, said grooves ending in said feed section (16).

19. An apparatus according to at least one of claims 13 to 18,
**characterized in**
that said extrusion apparatus (1) comprises a tempering device (21) in the area of the feed section (16) of said extruder screw (6).

20. An apparatus according to at least one of claims 13 to 19,
**characterized in**
that shear elements (22) are arranged in said plasticating section (17) of said extruder screw (6).

21. An apparatus according to at least one of claims 13 to 20,
**characterized in**
that said feeder (14) for feeding said foaming agent comprises a feed conduit (23) which extends through said extruder barrel (20) and ends in the area of said mixing section (18) of said extruder screw (6).

22. An apparatus according to at least one of claims 13 to 21,
**characterized in**
that said feeder (14) comprises a liquefier (24) and a metering pump (25).

23. An apparatus according to at least one of claims 13 to 22,
**characterized in**
that mixing elements (26) are arranged in said mixing section (18) of said extruder screw (6).

24. An apparatus according to at least one of claims 13 to 23,
**characterized in**
that said mixing section (18) is followed by a homogenizing and cooling section (19) of said extruder screw (6).

25. An apparatus according to at least one of claims 13 to 24,
**characterized in**
that said molding tool (11, 12) is bipartite and composed of a shaping die (11) and a sizing die (12) which are successively arranged in the direction of transportation.

26. An apparatus according to at least one of claims 13 to 25,
**characterized in**
that said shaping die (11) includes a guide channel (27) having a cross-section greater than the cross-section of a discharge port (28).

27. An apparatus according to at least one of claims 13 to 26,
**characterized in**
that said sizing die (12) comprises a cooler (29).

28. An apparatus according to at least one of claims 13 to 27,
**characterized in**
that another cooler (30) is arranged in the direction of transportation behind said sizing die (12).

29. An apparatus according to at least one of claims 13 to 28,
**characterized in**
that two extruders (13) are successively arranged, with plasticating and mixing being performed in said first extruder and homogenizing and cooling in said second extruder.

## Revendications

1. Procédé pour fabriquer un polymère expansé à l'aide d'un dispositif d'extrusion (1), prévoyant les étapes suivantes :
i) amenée du polymère (2) dans le dispositif d'extrusion (1) ;
ii) fusion du polymère ;
iii) amenée d'un agent d'expansion dans le polymère en fusion qui se trouve dans le dispositif d'extrusion, à une pression et une température définies ;
iv) mélange de l'agent d'expansion et du polymère en fusion ;
v) refroidissement du mélange polymère/agent d'expansion ;
vi) production d'une baisse de pression comme différence de pression entre la pression d'entrée et la pression de sortie d'un dispositif d'étranglement (3) en vue de la formation de germes d'alvéoles à l'intérieur du mélange, et
vii) formage et expansion du polymère grâce au fait qu'on laisse grossir les germes d'alvéoles, et séparation au moins partielle de l'agent d'expansion et du polymère ainsi que stabilisation du polymère expanse, grâce à un refroidissement,
caractérisé en ce que lors de l'étape vi), pour commander la quantité de mélange polymère/agent d'expansion fournie par le dispositif d'étranglement, on règle le débit de celle-ci, et pour maintenir la baisse de pression quel que soit le débit réglé, on modifie la pression d'entrée du dispositif d'étranglement (3) en fonction de la pression de sortie.

2. Procédé selon la revendication 1, caractérisé en ce que le débit est réglé grâce à la variation d'une vitesse de rotation d'une première roue dentée (4) d'une pompe à engrenages qui sert de dispositif d'étranglement (3).

3. Procédé selon la revendication 1 ou 2, caractérisé en ce que les pressions d'entrée et de sortie du dispositif d'étranglement (3) sont déterminées par un dispositif de commande et un dispositif d'évaluation.

4. Procédé selon l'une au moins des revendications précédentes, caractérisé en ce que la pression d'entrée du dispositif d'étranglement (3) est modifiée grâce à la variation d'une vitesse de rotation d'une vis d'extrudeuse (6) du dispositif d'extrusion (1).

5. Procédé selon l'une au moins des revendications précédentes, caractérisé en ce que l'unité de commande et d'évaluation commande la vitesse de rotation de la première roue dentée (4) et/ou de la vis d'extrudeuse (6).

6. Procédé selon l'une au moins des revendications précédentes, selon lequel le polymère (2) est amené sous forme de particules de polymère broyées, en particulier sous la forme d'un granulat,
caractérisé en ce qu'avant l'étape ii), la pression qui règne à l'intérieur du dispositif d'extrusion (1) est amenée à une valeur maximale grâce au frottement interne entre les particules de polymère qui traversent la vis d'extrudeuse (6) en direction du dispositif d'étranglement (3).

7. Procédé selon l'une au moins des revendications précédentes, caractérisé en ce qu'une première partie des particules de polymère transportées est déplacée le long de creux qui s'étendent globalement dans le sens de transport, tandis que la seconde partie est déplacée directement par la vis d'extrudeuse (6).

8. Procédé selon l'une au moins des revendications précédentes, caractérisé en ce que dans la zone où la pression est amenée à la valeur maximale, dans le dispositif d'extrusion (1), les particules de polymère subissent un équilibrage de température.

9. Procédé selon l'une au moins des revendications précédentes, caractérisé en ce que l'adjonction dosée de l'agent d'expansion au polymère en fusion, lors de l'étape iii), se fait à l'état liquide.

10. Procédé selon l'une au moins des revendications précédentes, caractérisé en ce que lors de l'étape vii), le mélange polymère/agent d'expansion traverse une première matrice de formage globalement sans baisse de pression, et mousse en quittant la matrice de formage.

11. Procédé selon la revendication 10, caractérisé en ce que le polymère expansé est amené directement dans une matrice d'étirage de finition (12) pour la fabrication d'un produit fini.

12. Procédé selon l'une au moins des revendications précédentes, caractérisé en ce que le polymère expansé est refroidi dans et/ou après la matrice d'étirage de finition (12).

13. Dispositif d'extrusion (1) pour fabriquer un polymère expansé, comportant au moins une extrudeuse (13) pourvue d'au moins une vis d'extrudeuse (6) qui transporte le polymère, un dispositif d'amenée d'agent d'expansion (14) pour amener un agent d'expansion (10) dans un polymère en fusion qui se trouve dans l'extrudeuse (13), un mélangeur (15) pour mélanger le polymère en fusion et l'agent d'expansion, un dispositif d'étranglement (3) pour produire une baisse de pression dans le mélange polymère/agent d'expansion amené, et un outil de formage,
caractérisé en ce que pour commander le débit du mélange polymère/agent d'expansion, le dispositif d'étranglement comporte une commande de débit.

14. Dispositif selon la revendication 13, caractérisé en ce que le dispositif d'étranglement (3) est conçu comme une pompe à engrenages avec au moins deux roues dentées (4, 5) qui s'engrènent, étant précisé que grâce à la commande de débit, la vitesse de rotation d'au moins une roue dentée est commandée.

15. Dispositif selon la revendication 13 ou 14, caractérisé en ce que pour mesurer la pression d'entrée et la pression de sortie du dispositif d'étranglement (3), le dispositif d'extrusion (1) comporte une unité de commande et d'évaluation.

16. Dispositif selon l'une au moins des revendications 13 à 15, caractérisé en ce qu'une vitesse de rotation de la vis d'extrudeuse (6) est commandée par l'unité de commande et d'évaluation.

17. Dispositif selon l'une au moins des revendications 13 à 16, dans lequel la vis d'extrudeuse (6) comporte au moins une section d'amenée (16), une section de plastification (17) et une section de mélange (18),
caractérisé en ce que dans la section d'amenée (16), il est prévu des rainures (9) qui sont formées dans une enveloppe (20) entourant la vis d'extrudeuse (6) et qui s'étendent globalement dans le sens de transport ou dans le sens axial de la vis d'extrudeuse.

18. Dispositif selon l'une au moins des revendications 13 à 17, caractérisé en ce que les rainures (9) ont une forme conique et une profondeur qui va en diminuant dans le sens de transport, étant précisé qu'elles aboutissent dans la section d'amenée (16).

19. Dispositif selon l'une au moins des revendications 13 à 18, caractérisé en ce que le dispositif d'extrusion (1) comporte dans la zone de la section d'amenée (16) de la vis d'extrudeuse (6) un dispositif d'équilibrage de température (21).

20. Dispositif selon l'une au moins des revendications 13 à 19, caractérisé en ce que des éléments de cisaillement (22) sont disposés dans la section de plastification (17) de la vis d'extrudeuse (6).

21. Dispositif selon l'une au moins des revendications 13 à 20, caractérisé en ce que le dispositif d'amenée (14) prévu pour l'agent d'expansion comporte une conduite d'amenée (23) qui traverse l'enveloppe d'extrudeuse (20) et qui débouche dans la zone de la section de mélange (18) de la vis d'extrudeuse (6).

22. Dispositif selon l'une au moins des revendications 13 à 21, caractérisé en ce que le dispositif d'amenée (14) comporte un liquéfacteur (24) et une pompe de dosage (25).

23. Dispositif selon l'une au moins des revendications 13 à 22, caractérisé en ce qu'il est prévu dans la zone de mélange (18) de la vis d'extrudeuse (6) des éléments mélangeurs (26).

24. Dispositif selon l'une au moins des revendications 13 à 23, caractérisé en ce qu'une section d'homogénéisation et de refroidissement (19) de la vis d'extrudeuse (6) fait suite à la section de mélange (18).

25. Dispositif selon l'une au moins des revendications 13 à 24, caractérisé en ce que l'outil de formage (11, 12) est divisé en deux et se compose d'une matrice de formage (11) et d'une matrice d'étirage de finition (12) disposées l'une derrière l'autre dans le sens de transport.

26. Dispositif selon l'une au moins des revendications 13 à 25, caractérisé en ce que la matrice de formage (11) comporte un conduit de guidage (27) dont la section transversale est supérieure à celle d'une ouverture de sortie (28).

27. Dispositif selon l'une au moins des revendications 13 à 26, caractérisé en ce que la matrice d'étirage de finition (12) comporte un dispositif de refroidissement (29).

28. Dispositif selon l'une au moins des revendications 13 à 27, caractérisé en ce qu'un autre dispositif de refroidissement (30) est disposé derrière la matrice d'étirage de finition (12), dans le sens de transport.

29. Dispositif selon l'une au moins des revendications 13 à 28, caractérisé en ce que deux extrudeuses (13) sont disposées l'une derrière l'autre, la plastification et le mélange se faisant dans la première tandis que l'homogénéisation et le refroidissement se font dans la seconde.
